# EUROPEAN PATENT APPLICATION

(11) **EP 0 958 885 A2**
(43) Date of publication of application: **24.11.1999**
(21) Application number: 99109607.4
(22) Date of filing: 14.05.1999
(51) Int. Cl.: B23K 37/04

(54) **Device for simultaneously maintaining an optimal welding position and welding two metal plates**

(30) Priority: 18.05.1998 IT BZ980029
(71) Applicant: Meccanica Ronzani di Ronzani Angelo & C. S.n.c., 38056 Levico Terme (TN) (IT)
(72) Inventor: Ronzani, Franco, 38056 Levico Terme(TN) (IT)
(74) Representative: Ghioni, Carlo Raoul Maria

(57) **Abstract**

Device for holding in an optimal welding position and for simultaneously welding two plates (1), comprising a bearing element (2) and a welding torch (4), supported on a support group (6), a mutual motion taking place between the welding torch (4) and the plates. The device is really versatile and able to be adapted for every welding situation independently of the lenght of the plates and of the dimensions of the welding torch in use in that it further comprises at least one wheel (5a), supported on the support group (6) in such a way as to be moved rigidly together with the support group (6) when the approaching and removing means (7) move it to make the welding torch (4) assume said close position, wherein the wheel (5a) rolls on the plates (1) pressing them simultaneously against the bearing element (2), the wheel (5a) being further supported on said support group (6) also rotatorily about a first axis of rotation (R1) parallel to the bearing plane (3).

## Description

The present invention relates to a device for maintaining in an optimal welding position and for simultaneously welding two metal plates, comprising a bearing element, on which bearing plane the plates bear during the welding operation, and a welding torch, supported on a support group whereon act, by moving it, approaching and removing means to bring the welding torch to a position close to the plates wherein the welding operation takes place, a mutual motion occurring between the welding torch and the plates.

Such a device is known in the art and is used in welding machines.

Two plates can be welded by positioning them mainly in three different manners: set close together, superposed with coinciding perimeters, partially superposed. The choice of one of these different arrangements depends on the subsequent use whereto the welded plates are destined. In all three cases, however, it is essential to maintain the plates optimally positioned, since both during the welding operation and during the subsequent cooling the plates tend to become deformed due to the thermal excursions they have to withstand. Such deformations must be contrasted to prevent the two plates to be welded from making such mutual motions as to compromise the optimal position.

Considering that the welding of two plates does not take place simultaneously along the line of mutual contact to be welded, but proceeding progressively with the weld along this line, the stresses that originate in the already welded part of the contact line are transmitted through the material to the successive part of the contact line yet to be welded, thereby creating distortions which lead to the detachment or the dissimilar lifting of the edges yet to be welded. To avoid this it is necessary forcedly to hold in position the two plates in the area wherein the weld takes place. The closer the plates are held to the point where the welding torch acts, the smaller the problems with welding quality due to distortions will be.

For this purpose the known device further comprises holding blocks, which are pressed on the plates and hold them still to prevent such asymmetrical movements. The blocks extend mutually parallel and define between them a strip of material along which the welding torch is moved to perform the welding operation.

However, this known device presents several drawbacks.

One drawback is given by the fact that the length of the device must be at least equal to the length of the plates to be welded, so that in order to weld very long plates the welding machine that presents this known device must also be very long and present equally long blocks, and hence the machine, in addition to being costly, is also very bulky.

Moreover, because of the rectilinear shape of the blocks, this device enables to effect only welds having a rectilinear direction coinciding with the one defined by the holding blocks.

Lastly, a further drawback consists of the fact that the plates to be welded must be absolutely planar, because otherwise the holding plates could not be set down on them.

A second welding machine is also known. It does not provide for the presence of a welding torch, since the welding method used therein is that of resistance welding. This method is used to weld superposed plates and entails applying an electrode on each of the two faces obtained by the superposition of two plates, and then subjecting the plates to a flow of current. The weld results from the fact that the plates, serving as resistors, are heated.

In the known machine the electrodes are constituted by wheels in appropriate electrically conducting material, which roll over the plates and also serve as pressing elements which compress the plates which are moved therebetween, making them mutually adhere and holding them in position.

This second known machine, however, also presents drawbacks.

Since it uses the resistance welding process, it is suitable for welding in a satisfactory manner only plates with reduced thickness, given that only for them it is possible to reach a melting temperature of the material in depth.

Moreover, the welding direction obtainable is mandatorily either circular planar, when the plates are set on a bearing element that rotates, or rectilinear planar, when the plates are set on a bearing element that makes them translate.

An essential aim of the present invention is to overcome the aforementioned drawbacks making available a device of the kind indicated in the opening paragraph, with which plates of any length or thickness can be welded together, simultaneously effecting high quality welds that involve the material in depth and uniformly join the two plates. A further aim is to realise a device that allows to keep the plates in position acting as close as possible to the point where the weld occurs, independently of the dimensions of the welding torch in use.

Yet another aim is to realise a device that allows to make welds also on curved plates or to make welds with non rectilinear profile.

These and other aims besides are attained by the device of the kind indicated in the opening paragraph in that according to the invention it further comprises at least one wheel, supported on the support group so that it is moved rigidly together with the support group when the approaching and removing means move it to make the welding torch assume said close position, wherein the wheel rolls over the plates simultaneously pressing them against the bearing element, the wheel being moreover supported on said support group also rotatorily about a first axis of rotation parallel to the support group.

According to claim 3, it is further provided for the wheel to be supported on said support group also in a translatable manner along a first direction of translation, parallel to the support plane and perpendicular to said first axis of rotation, in such a way as to be approachable to or removable from the welding torch by a distance of selectable size.

The characteristics indicated in these two claims both concur to enable the optimal minimisation of the distance between the point where the welding torch acts and the point where the plates are held in position by the wheel, independently of the size of the welding torch. With the characteristics according to the invention the wheel can be rotated and/or approached to the torch to mirror its particular shape, narrower in the lower part, without thus being conditioned by the more sizeable part thereof, i.e. the upper part.

Moreover the plates are held only where it is necessary, i.e. in proximity to the welding point, since the wheel moves along the plates together with the welding torch depending on the movement that is transmitted to them by the approaching and removing means through the support group. The wheel and its effective action are totally independent of the length of the plates to be welded.

The characteristics of claim 2 make optimal the advantages obtained by rotating the wheel.

The characteristics of claim 4 are perfectly suited to a particular welding situation which arises when two plates are only partially superposed and it is desired to weld on the side of the contact edge. Thanks to the possibility of moving the welding torch according to the invention, it is possible to minimise the distance between the point wherein the plates are held in position and the point where the welding torch locally melts the plates.

Claim 5 relates to a possible convenient and simple shape of the articulation of the welding torch to the support group.

The characteristic according to claim 6 confers to the welding torch, for adjustment purposes, a capability for autonomous movement with respect to the other components supported on the support group of the device. This is necessary to position the welding torch at a correct distance from the plates in order for the welding process to be initiated.

Claim 7 relates to a second embodiment of the device according to the invention, wherein the device comprises a second wheel positioned opposite to the first wheel with respect to the welding torch, which second wheel is supported on the support group so that it can be moved rigidly together with the support group when the approaching and removing means move it to make the welding torch assume said close position, wherein the wheel rolls over the plates simultaneously pressing them against the bearing element, the second wheel being moreover supported on the support group rotatorily about a second axis of rotation parallel to said first axis of rotation.

According to claim 8 moreover it can be provided for the second wheel to be supported on the support group in a translatable manner along said first direction of translation, thereby being approachable to or removable from the welding torch by a distance of selectable size.

This second embodiment reflects in its main characteristics recalled above the innovative principles already illustrated with reference to the first embodiment of claims 1 and 2. It is eminently suited to the situation encountered when two plates set close to each other or two superposed or even just partially superposed plates must be welded on their surfaces.

The characteristic of claim 9 allows a differentiated approach of the two wheels to the bearing plane, and it is particularly suited for those situations where to hold the plates in position a wheel rolls on the two superposed plates and the other one only on the larger plate.

With the characteristic of claim 10 the welding torch can perform also in this second embodiment autonomous movements towards or away from the plates, to adjust the optimal distance for the welding process to be initiated.

Claim 11 relates to the support group whereon the approaching and removing means act.

Their embodiment, within the scope of the knowledge of the average person versed in the art, must be such as to reflect the functional characteristics of claim 12. In this way with the device according to the invention it is possible to effect welds whose profile need not necessarily be extremely regular, i.e. planar circular or planar rectilinear, since the support group and the welding torch as well as the wheel or wheels move together along the plates as a consequence of the motion imposed thereto by the approaching and removing means.

For instance, the welding of curved plates can be hypothesised, if according to claim 13 the bearing element presents a curved bearing element and the removing and approaching means were programmed in a manner suitable to make the support group travel along a surface parallel to this curved surface

Claim 14 finds application in the case wherein the plates are very long, so that they can slide under the welding torch.

Claim 15 delimits the optimal rotated positions which the wheels can assume.

Claim 16 relates to a particular advantageous shape of the wheel or wheels.

This shape allows to draw the utmost advantage from the provided ability to rotate, given that each wheel is already inclined to a certain extent in its normal, initial position. In the case wherein this initial inclination is not suited to the welding torch in use, by inclining it to a lesser extent with respect to the bearing plane it is possible to maintain minimal the distance between the point where the wheel acts and the point where the welding takes place.

Further features and advantages of the present invention shall be made more readily apparent from the detailed description that follows of an embodiment, illustrated purely by way of non limiting example in the accompanying drawings, wherein:
- Figures 1a and 1b respectively show a front view of a first embodiment of the device according to the invention presenting a single wheel, the possibility of rotating and respectively translating the wheel being shown in dashed lines,
- Figures 2a and 2b respectively show a front view of the device of Figure 1, the welding torch being shown in its translated and rotated position and the possibility of rotating and respectively translating the wheel being shown in dashed lines,
- Figures 3a and 3b respectively show a front view corresponding to those of the figures 1a and 1b, the device, however, presenting a different wheel from those of Figures 1a and 1b,
- Figures 4a and 4b show a front view corresponding to those of Figures 2a and 2b, the device, however, presenting a different wheel from those of Figures 2a and 2b,
- Figure 5 shows a side view of the device of Figures 1a, 1b and 3a, 3b in the hypothesis of replacing the bearing element of Figures 1a, 1b and 3a, 3b with a different bearing element,
- Figures 6a and 6b respectively show a front view of a second embodiment of the device according to the invention presenting a pair of wheels, the possibility of rotating and respectively translating the wheels being shown in dashed lines,
- Figures 7a and 7b respectively show a front view corresponding to that of Figures 6a, 6b, the device, however, presenting a pair of wheels differing from those in Figures 6a, 6b,
- Figure 8 shows a side view of the device of Figures 6a, 6b and 7a, 7b, in the hypothesis of replacing the bearing element of Figures 6a, 6b and 7a, 7b with a bearing element of different shape,
- Figure 9 shows a front view of the second embodiment of the device according to the invention in a particular situation of superposition of the plates,
- Figure 10 shows a front view of the second embodiment of the device according to the invention in the case of welding of two plates set close together,
- Figure 11 shows a front view corresponding to that of Figure 10, the device, however, presenting different wheels from those of Figure 10,
- Figures 12 through 15 show, on the basis of the first embodiment and by way of example, in sequence the movements that a wheel can perform in order for the plates to be held in position as close as possible to the point where welding occurs.

The figures show a device for maintaining in an optimal welding position and for simultaneously welding two plates 1.

It comprises a bearing element 2 and a welding torch 4. The plates 1 bear on the bearing plane 3 during the welding operation.

For this purpose the welding torch 4 is moved closer to the plates 1. Between the welding torch 4 and the plates 1 there is a mutual motion.

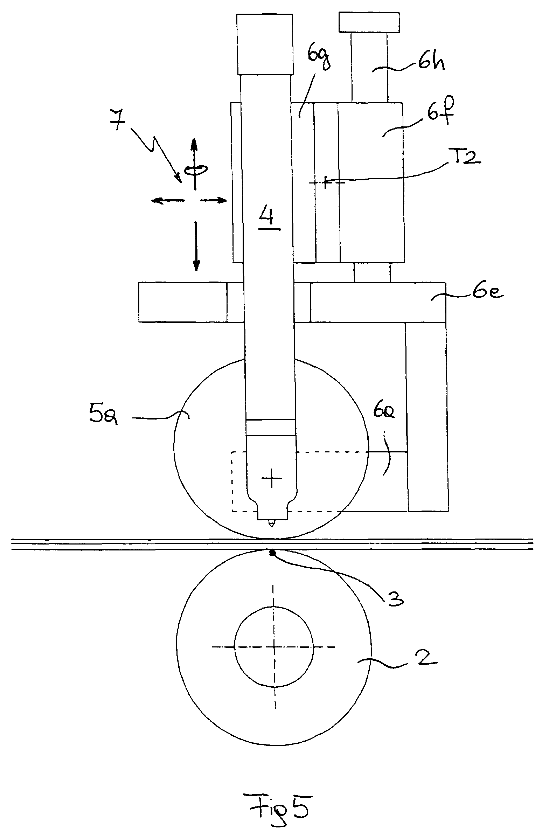

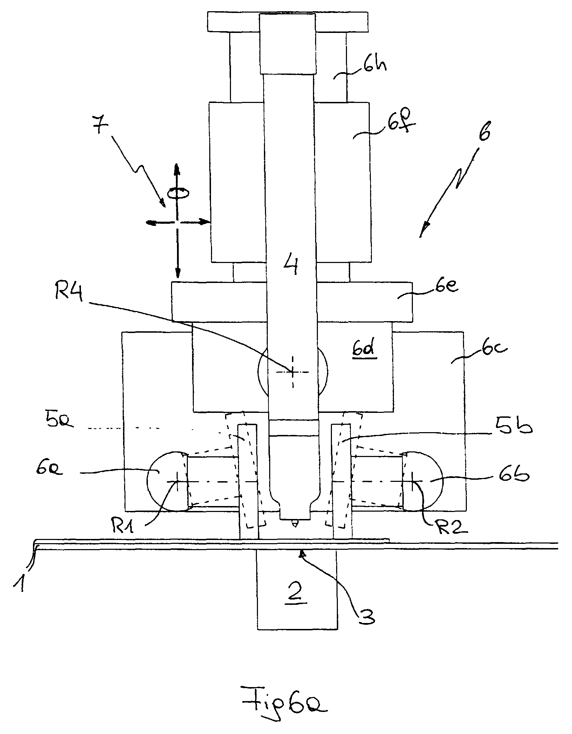

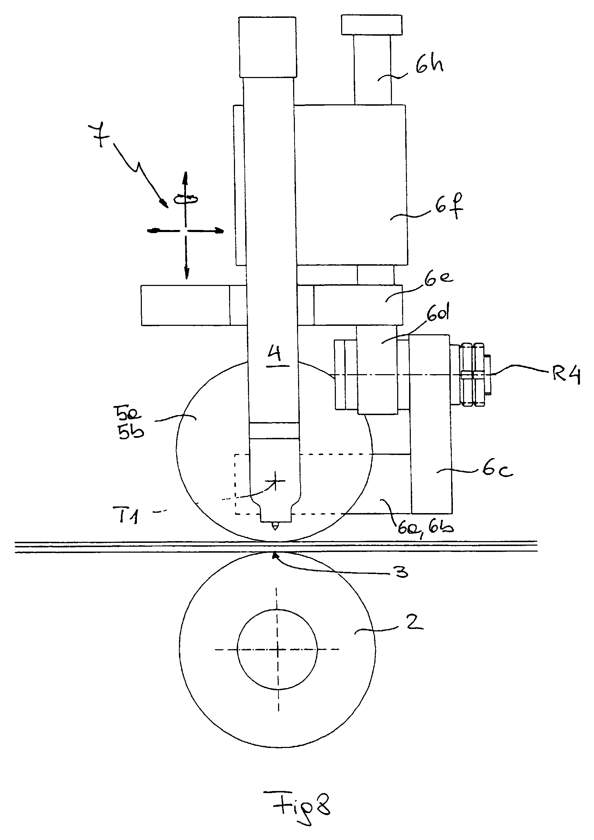

This mutual motion can take place thanks to the fact that the welding torch 4 is motionless and the plates 1 are moved, as shown in Figures 5 and 8, where the bearing element 2 is constituted by a roller with which or on which the plates 1 are made to slide. Or, the motion can take place thanks to the fact that the welding torch 4 is moved along the plates 1, as shown in the remaining figures where the bearing element 2 is constituted by a block.

The choice of a type of bearing element 2 over another can depend for instance on the length of the plates to be welded or on the type of weld to be effected. For example, in the presence of long plates it may be convenient to make them slide on the bearing element 2 shaped as a roller.

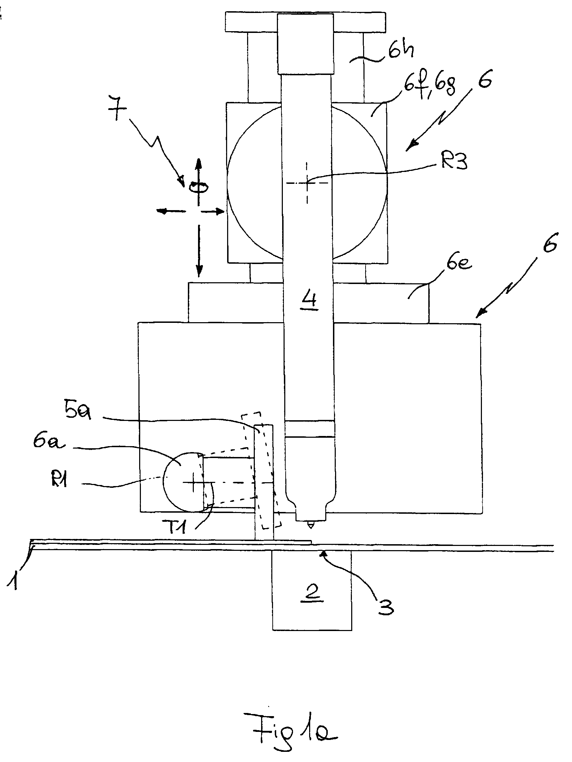

According to a first embodiment of the invention, shown in particular in figures 1a through 5, to hold in position the plates 1 the device comprises at least a wheel 5a.

The wheel 5a is supported on a first support element 6a of a support group 6 so that it can be moved rigidly together with the support group 6 when approaching and removing means 7, not shown in detail, move it. In this first embodiment the support group 6 is constituted by a plurality of components 6a, 6e, 6f, 6g, 6h which shall be described below.

The support group 6 is moved from a rest position distant from the bearing plane 3 (not shown), wherein the wheel 5a is not in contact with the plates 1 bearing on the support element 2, to a position close to the support plane 3, wherein the wheel 5a rolls on the plates 1, and vice versa.

All figures refer to this position, wherein the wheel 5a presses the plates against the bearing element 2.

For the movement the support group 6 presents a support member 6e whereon the removing and approaching means 7 act. The latter are able to move the support member 6e closer to or farther away from the beating plane 3, to translate the support member 6e parallel to the bearing plane 3 and to make the support member 6e perform a combination of these movements. Their conformation is known and it belongs to the field of actuators and will not be further illustrated. In the figure their presence is indicated by pointing to the movements that they make the support group 6 effect.

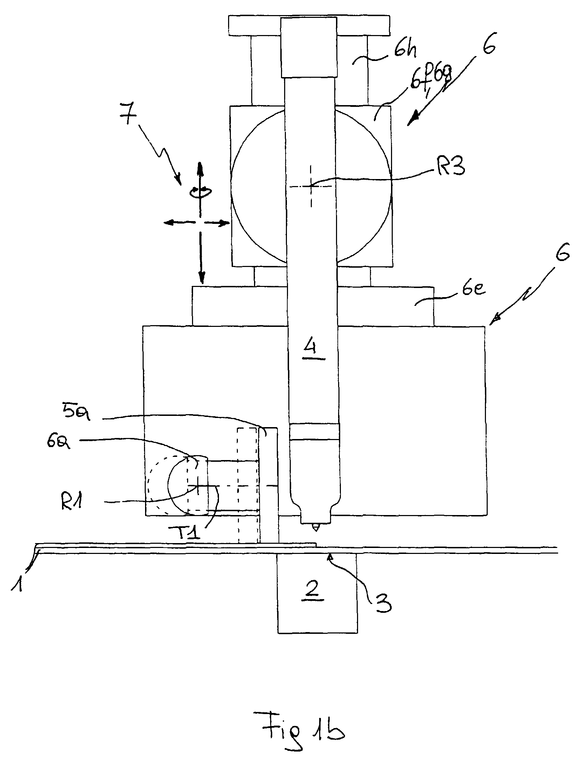

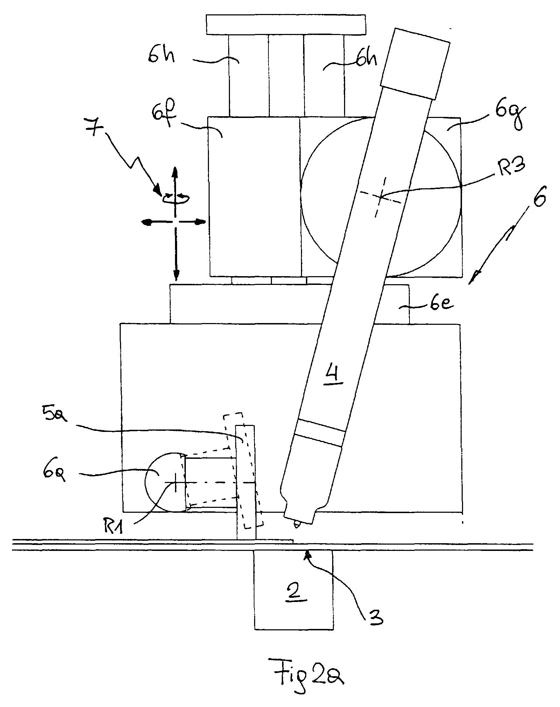

Figures 1a, 1b, 2a, 2b refer to a first possible conformation of the wheel 5a. The wheel 5a can be rotated about a first axis of rotation R1, from an initial position, perpendicular to the bearing plane 3, to a position rotated according to choice and inclined with respect to the beating plane 3, and vice versa. In Figures 1a, 2a this possibility of rotation is indicated in dashed lines.

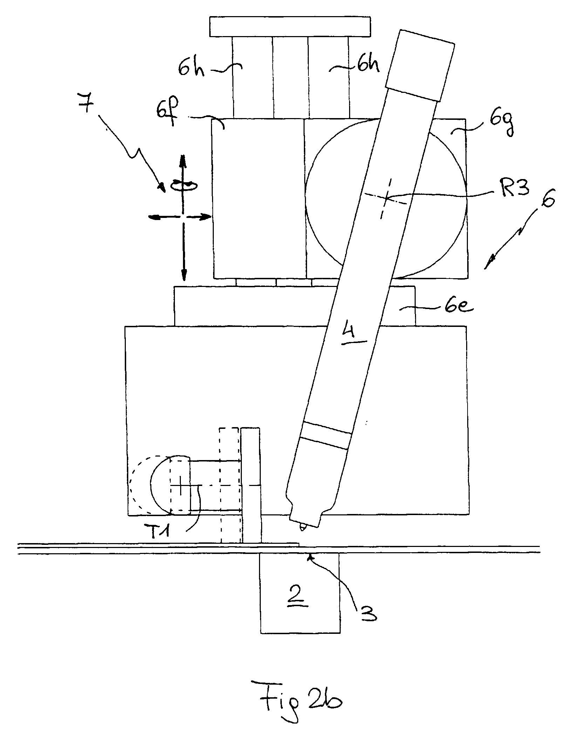

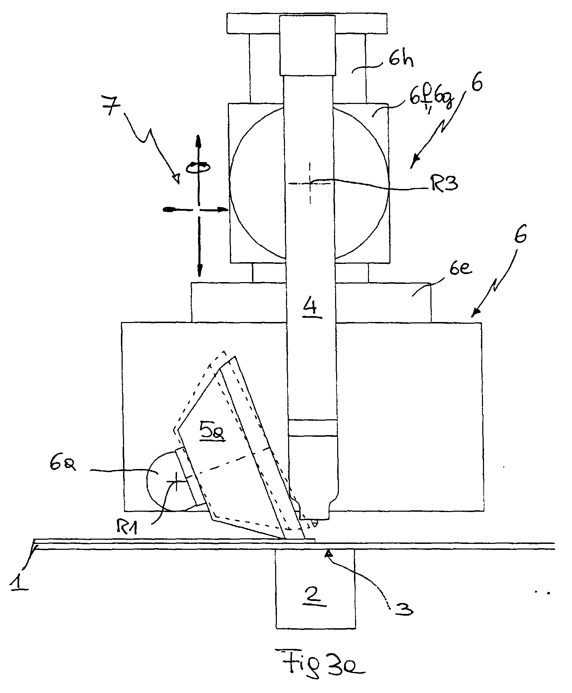

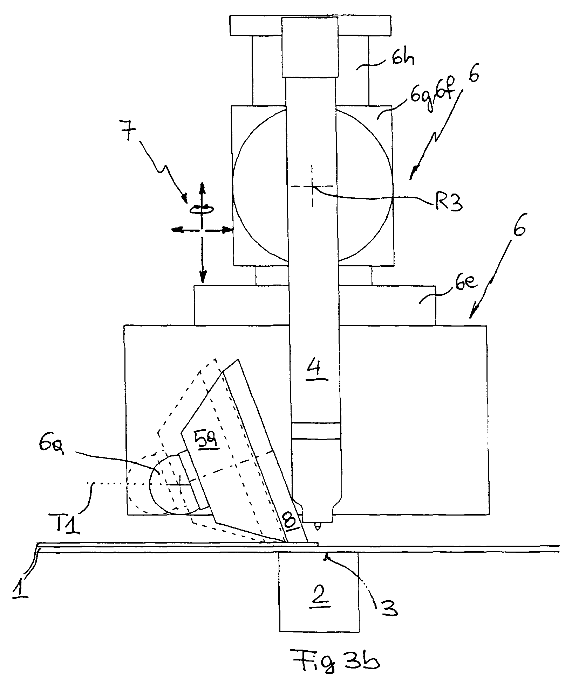

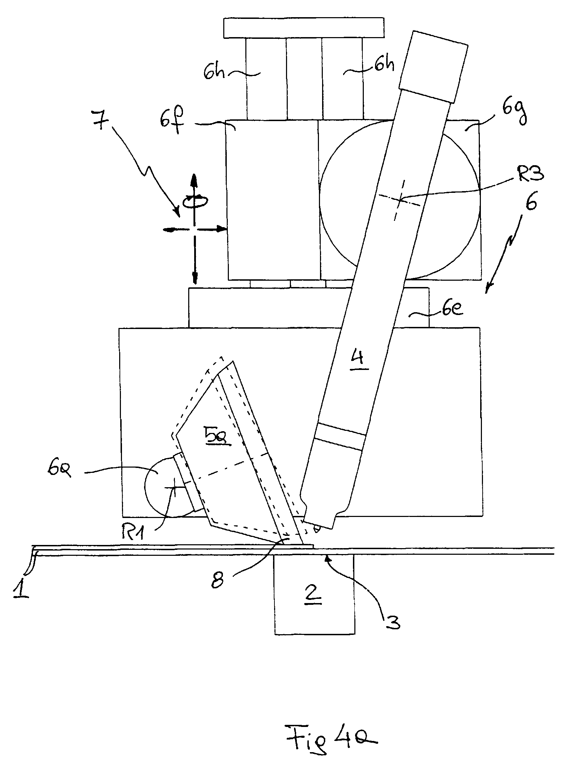

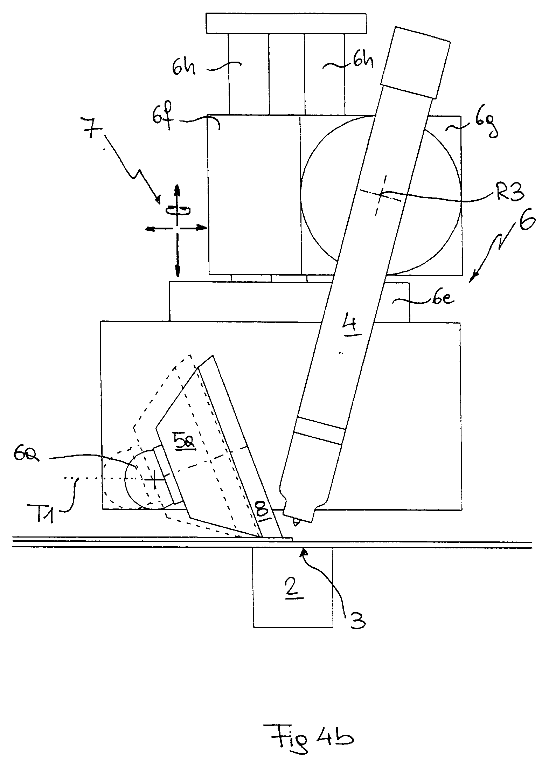

Figures 3a, 3b, 4a, 4b instead refer to a second possible advantageous conformation of the wheel 5a, whereby the wheel 5a presents an extremity portion 8 of truncated cone shape, with which it rolls on the plates 1. In this case too the wheel 5a can be rotated about said first axis of rotation R1. However, unlike the cylindrical wheel 5a, represented in Figures 1a - 2b, it can be inclined from an initial position, already inclined with respect to the bearing plane 3, to a final position, inclined by a lesser measure than the initial one, and vice versa.

In Figures 3a, 4a this capability for rotation is shown in dashed lines.

In particular said first axis of rotation R1 can also be perpendicular to the direction of mutual motion between the wheel 5a and the plates 1, which makes optimal the advantages obtained by rotating the wheel 5a.

The wheel 5a is supported on said first support element 6a also in a manner translatable along a first direction of translation T1. This direction is parallel to the bearing plane 3 and perpendicular to said first axis of rotation R1. In this way the wheel 5a is approachable to or removable from the welding torch 4 by a distance whose extent can be chosen. This capability for translation is shown in dashed lines in Figures 1b, 2b in the case of providing for a cylindrical wheel 5a and in Figures 3b, 4b in the case of providing for a wheel 5a with truncated cone extremity portion 8.

In regard to the welding torch 4, it is supported on a support body 6f of the support group 6 to that it is also moved rigidly together with the support group 6 when it is moved by the approaching and removing means 7.

In said distant position from the bearing plane 3 the welding torch 4 is in an inactive position and in said position approached to the bearing plane 3, whereto all the figures refer, the welding torch 4 is in an operative welding position. The welding torch 4 is also supported in a manner translatable along a second direction of translation T2, parallel to said bearing plane 3 and perpendicular to said first axis of rotation R1. In this way it can be approached to or removed from the wheel 5a by a distance whose extent can be chosen.

The welding torch 4 is also supported rotatorily about a third axis of rotation R3, parallel to said first axis of rotation R1. It can be rotated from an initial position, wherein it is positioned perpendicular to the bearing plane 3, to a position rotated by an angle of choice, wherein the welding torch is positioned inclined with respect to the approach plane 3, and vice versa. This situation is shown in Figures 2a, 2b and 4a, 4b.

This rotatory and translatable support of the welding torch 4 can be obtained by interposing between the support body 6f and the welding torch 4 an intermediate support body 6f This intermediate support body 6g is supported on the support body 6f in a manner translatable along said second direction of translation T2 and on it the welding torch 4 is supported rotatorily about said third axis of rotation R3. The support body 6f is then supported on the support group 6, in particular on bodies 6h for guiding the support group 6, in a manner translated away from and towards the bearing plane 3. This enables to perform adjustment moves to the welding torch 4 alone, once the wheel 5a presses on the plates 1.

Figure 5 shows a lateral view of this first embodiment of the device according to the invention, having however replaced the block shaped support element with a roller shaped support element. On this roller the plates 1 can be made to slide and for this purpose the roller can be an idle roller or a tide roller. The device thus allows to weld plates of any length.

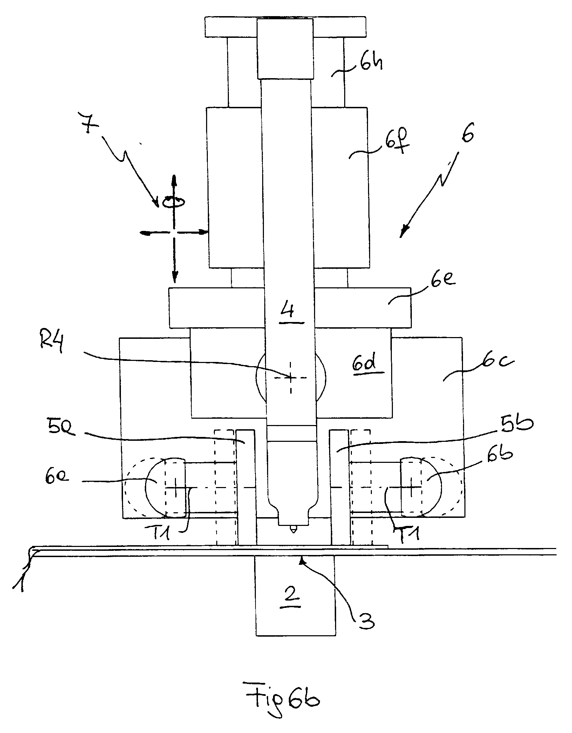

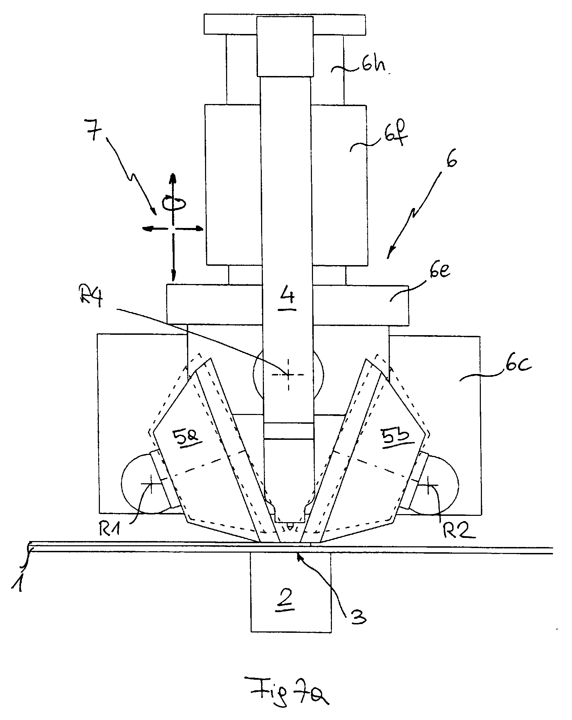

A second embodiment of the device according to the invention, whereto are referred in particular figures 6a to 11, comprises a second wheel 5b positioned opposite to said first wheel 5a with respect to the welding torch 4. In this second embodiment the support group 6 is slightly different and it is constituted by a plurality of components 6a, 6b, 6c, 6d, 6e, 6f, 6h which shall be described farther on.

As the figures show, in this embodiment the welding torch 4 is not translatable along said second axis of translation T2 and is not able to rotate about said third axis of rotation R3.

This second wheel 5b is supported on a second support element 6b of the support group 6 in such a way as to be moved rigidly together with the support group 6 when the approaching and removing means 7 move the support group 6. Similarly to the first wheel 5a also the second wheel 5b in said positioned close to the bearing plane 3 rolls on the plates 1 simultaneously pressing them against the bearing element 2.

Figures 6a, 6b refer to a first possible conformation of the wheels. The wheel 5a and respectively 5b can be rotated about the first R1 and respectively about a second axis of rotation R2, from an initial position, perpendicular to the bearing plane 3, to a positioned rotated according to choice and inclined with respect to the bearing plane 3, and vice versa.

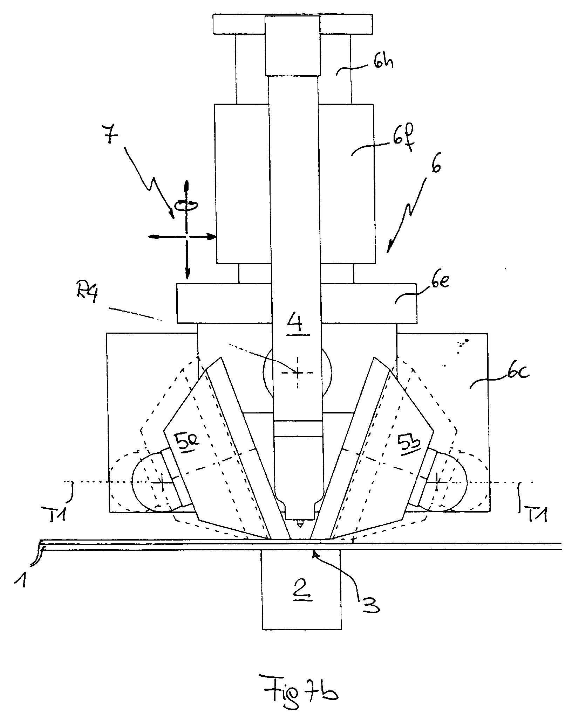

Figures 7a, 7b instead refer to a second advantageous conformation of the wheels, whereby also the wheel 5b presents an extremity portion 8 of truncated cone shape, with which it rotates on the plates 1. The wheel 5a and respectively 5b can be rotated about said first R1 and respectively second axis of rotation R2 from an initial position, already inclined with respect to the bearing plane 3, to a final position, inclined to a greater extent than the initial one, and vice versa.

In the figures this capability for rotation is shown in dashed lines.

The second wheel 5b is also supported rotatorily about a second axis of rotation R2 parallel to said first axis of rotation R1.

It is also supported on the second support element 6b in a manner translatable along said first direction of translation T1. In this way the second wheel 5b can be moved away from the welding torch 4 by a distance of an extent of choice.

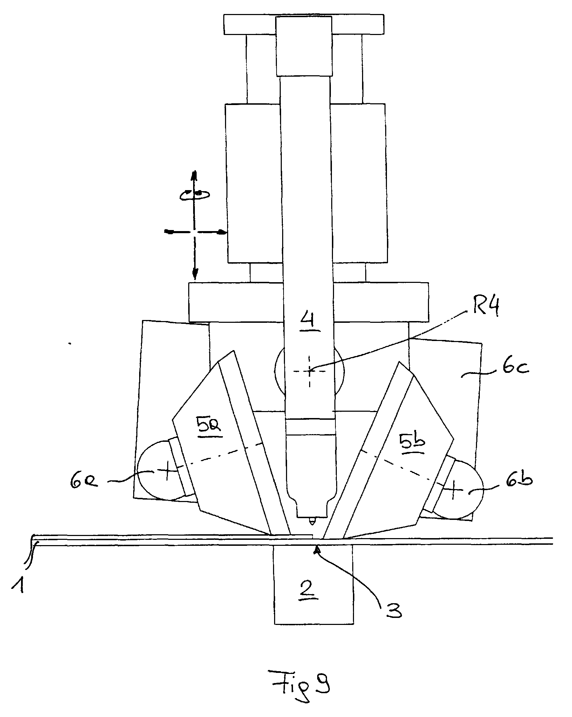

The first 6a and the second support element 6b are supported on a common support 6c of the support group 6. This common support element 6c is in turn supported on an intermediate support element 6d of the support group 6 rotatorily about a fourth axis of rotation R4 parallel to said first R1 and second axis of rotation R2. This allows to have common rotations of the two wheels 5a, 5b together, to adapt the device for instance to the situation shown in Figure 9.

Figure 8 shows a lateral view of this second embodiment of the device according to the invention, but having replaced the block shaped bearing element 2 with a roller shaped bearing element 2. On this roller the plates 1 can be made to slide and for this purpose the roller can be an idle roller or a driving roller. The device thus allows to weld plates of any length.

In regard to the welding torch 4 it is supported on the support body 6f, in turn supported on guiding bodies 6h of the support group 6 in a translatable manner away and towards the bearing plane 3. This enables also this second embodiment to make the welding torch alone perform adjustment movements, once the wheels 5a, 5b press on the plates 1.

Lastly the support member 6e of the support group 6 is connected with the intermediate support element 6d and with the guiding bodies 6h, to transmit thereto the movement that it receives from the approaching and removing means 7.

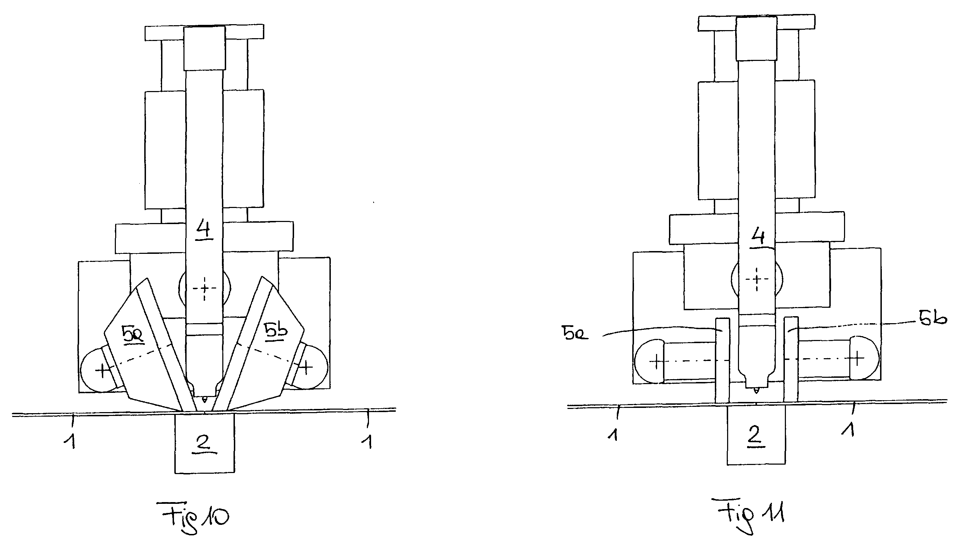

Figures 10 and 11 show how this second embodiment is perfectly usable when two plates set close together are to be welded.

The operation of the device according to the invention shall be illustrated below based on Figures 12 through 15 and with reference to the first embodiment. Of course, the description provided below applies also to the second embodiment presenting a pair of wheels 5a, 5b.

Figure 12 shows the situation that would be created when a welding torch 4 presents a greater size than the welding torch 4 used previously. Lacking the possibility to move the wheel 5a the new welding torch 4, larger than the previous one, could not be used.

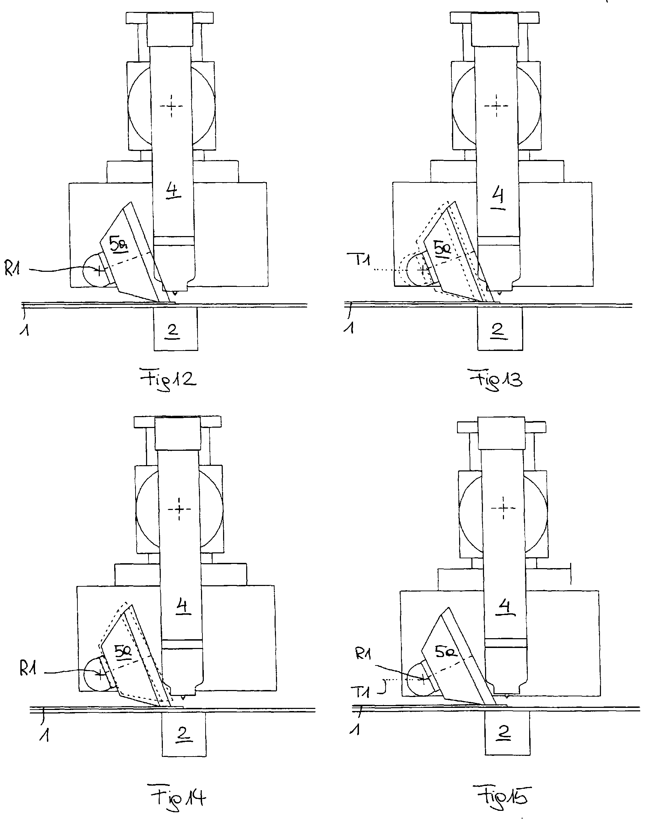

To adjust the new position of the wheel 5a with respect to the welding torch 4, one proceeds as shown in the figures. The wheel 5a is first moved away and assumes the dashed position in Figure 13. Subsequently the wheel 5a is rotated and assumes the dashed position in Figure 14. By effect of such rotation, which, as noted previously, occurs in such a way as to reduce its inclination with respect to the bearing plane 3, it can also lose contact with the plates 1 if the rotation is of a certain size. In this case, the positioning of the wheel 5a is ended by approaching the support group 6 to the bearing plane 3 and obtaining the final position shown in Figure 15. Now the plates 1 are again held optimally and the welding torch 4 can proceed with welding.

## Claims

1. Device for holding in an optimal welding position and for simultaneously welding two plates (1), comprising a bearing element (2), on which bearing plane (3) bear the plates (1) during the welding operation, and a welding torch (4), supported on a support group (6) whereon act, by moving it, approaching and removing means (7) to bring the welding torch (4) in a position close to the plates (1) wherein the welding operation takes place, a mutual motion taking place between the welding torch (4) and the plates, characterised in that it further comprises at least one wheel (5a), supported on the support group (6) in such a way as to be moved rigidly together with the support group (6) when the approaching and removing means (7) move it to make the welding torch (4) assume said close position, wherein the wheel (5a) rolls on the plates (1) pressing them simultaneously against the bearing element (2), the wheel (5a) being further supported on said support group (6) also rotatorily about a first axis of rotation (R1) parallel to the bearing plane (3).

2. Device according to claim 1, characterised in that said first axis of rotation (R1) is also perpendicular to the direction of mutual motion between the wheel (5) and the plates (1).

3. Device according to claim 1 or 2, characterised in that the wheel (5a) is supported on said support group (6) also in a manner able to translate along a first direction of translation (T1), parallel to the bearing plane (3) and perpendicular to said first axis of rotation (R1), in such a way as to be approachable to or removable from the welding torch (4) by a distance of selectable extent.

4. Device according to one of the previous claims, characterised in that the welding torch (4) is further supported on the support group (6) also in a manner translatable along a second direction of translation (T2), parallel to said bearing plane (3) and perpendicular to said first axis of rotation (R1), in such a way as to be approachable to or removable from the wheel (5a) by a distance of a selectable extent and in that the welding torch (4) is further supported on said support group (6) also rotatorily about a third axis of rotation (R3), parallel to said first axis of rotation (R1), from an initial position, wherein the welding torch (4) is positioned perpendicular to the bearing plane (3), to a position rotated by an angle of choice, wherein the welding torch (4) is positioned inclined with respect to the bearing plane (3), and vice versa.

5. Device according to claim 4, characterised in that the welding torch (4) is supported in a rotatory and translatable manner on a support body (6f) of the support group (6), interposing between said support body (6f) and the welding torch (4) an intermediate support body (6g), which is supported on the support body (6f) in a manner translatable along said second direction of translation (T2) and whereon the welding torch (4) is supported rotatorily about a third axis of rotation (R3).

6. Device according to claim 3 or 5, characterised in that the support body (6f) is supported on guiding bodies (6h) of the support group (6), in a manner translatable away from and towards the bearing plane (3).

7. Device according to one of the claims 1 through 3, characterised in that it comprises a second wheel (5b) positioned opposite to the first wheel (5) with respect to the welding torch (4), which second wheel (5b) is supported on the support group (6) in such a way as to be moved rigidly together with the support group (6) when the approaching and removing means (7) move it to make the welding torch (4) assume said close position, wherein the wheel (5b) rolls on the plates (1) simultaneously pressing them against the bearing element (2), the second wheel (5b) being further supported on the support group (6) also rotatorily about a second axis of rotation (R2) parallel to said first axis of rotation (R1).

8. Device according to claim 7 characterised in that the second wheel (5b) is supported on the support group (6) in a manner translatable along said first direction of translation (T1), in such a way as to be approachable to or removable from the welding torch (4) by a distance of a selectable extent.

9. Device according to claim 7 or 8 characterised in that the support group (6) presents a common support element (6c), whereon the wheels (5a, 5b) are directly or indirectly supported and in that the common support (6c) is supported on an intermediate support element (6d) of the support group (6) rotatorily about a fourth axis of rotation (R4) parallel to said first (R1) and second axis of rotation (R2).

10. Device according to one of the claims from 7 to 9 or 5, characterised in that the support group (6) presents guiding bodies (6h), whereon the welding torch (4) is supported in a translatable manner away from and towards the bearing plane (3) by means of a support body (6f) of the support group (6).

11. Device according to claim 6 or 10 characterised in that the support group (6) presents a support member (6e) whereon the approaching and removing means (7) act to move the support group (6) as a whole.

12. Device according to any one of the previous claims characterised in that the removing and approaching means (7) are able to move the support group (6) closer to or farther away from the bearing plane (3), to translate the support group (6) parallel to the bearing plane (3) and to make the support group (6) perform a combination of these movements.

13. Device according to any of the previous claims characterised in that the bearing element (2) presents a curve bearing surface.

14. Device according to any of the previous claims characterised in that the bearing element (2) is a cylinder whereon the plates (1) slide.

15. Device according to any of the previous claims characterised in that the wheel (5a) and respectively the wheels (5a, 5b) can be rotated about said first (R1) and respectively second axis of rotation (R2), from an initial position, perpendicular to the bearing plane (3), to a positioned rotated according to choice and inclined with respect to the bearing plane (3), and vice versa.

16. Device according to any of the previous claims 1 through 12 characterised in that the wheel (5a) and respectively the wheels (5a, 5b) present(s) an extremity portion (8) of truncated cone shape, with which it and respectively they rotate(s) on the plates (1), and in that it and respectively they can be rotated about said first (R1) and respectively second axis of rotation (R2) from an initial position, inclined with respect to the bearing plane (3), to a final position, inclined to a lesser extent than the initial one, and vice versa.
